# EUROPÄISCHE PATENTSCHRIFT

(11) **EP 3 558 760 B1**
(45) Veröffentlichungstag und Bekanntmachung des Hinweises auf die Patenterteilung: **06.01.2021**
(21) Anmeldenummer: 17804909.4
(22) Anmeldetag: 29.11.2017
(51) Int. Cl.: B60R 21/232, B60R 21/237

(54) **FAHRZEUG MIT EINEM GASSACK, INSBESONDERE MIT EINEM VORHANGGASSACK, UND VERFAHREN ZUR MONTAGE EINES GASSACKS**
VEHICLE HAVING AN AIRBAG, IN PARTICULAR HAVING A CURTAIN AIRBAG, AND METHOD FOR ASSEMBLY OF AN AIRBAG
VÉHICULE COMPRENANT UN SAC GONFLABLE, EN PARTICULIER COMPRENANT UN SAC GONFLABLE DE TYPE RIDEAU, ET PROCÉDÉ DE MONTAGE D'UN SAC GONFLABLE

(30) Priorität: 20.12.2016 DE 102016124959
(43) Veröffentlichungstag der Anmeldung: 30.10.2019
(73) Patentinhaber: Dalphi Metal España, S.A., 36213 Vigo (ES)
(72) Erfinder: RODILLA, Mar, 36203 Vigo (ES); SANTÍN NAVARRO, Pedro, José, 36204 Vigo (ES)
(74) Vertreter: ZF Patentabteilung - DIPS
(86) Internationale Anmeldenummer: PCT/EP2017/080759
(87) Internationale Veröffentlichungsnummer: WO 2018/114253

(56) Entgegenhaltungen:
- WO-A1-2007/031244
- JP-A- 2008 030 717
- JP-A- 2011 121 473
- US-A1- 2012 267 879

## Beschreibung

Die Erfindung betrifft ein Fahrzeug mit einem Gassack, insbesondere mit einem Vorhanggassack, der im Ruhezustand einen ballenartigen Abschnitt und zwei Armabschnitte umfasst, wobei die Armabschnitte den ballenartigen Abschnitt im Querschnitt abschnittsweise umgreifen und die beiden freien Enden der Armabschnitte einen Entfaltungsbereich begrenzen, wobei die Winkelhalbierende des Entfaltungsbereichs durch den Mittelpunkt des ballenartigen Abschnitts verläuft, gemäß dem Oberbegriff des Patentanspruches 1. Des Weiteren betrifft die Erfindung ein Verfahren zur Montage eines Gassacks, gemäß dem Oberbegriff des Patentanspruchs : 8.

Aus US 7,731,225 B2 ist beispielsweise ein gattungsgemäßer Gassack mit einer Parasol-Faltung bzw. Umbrella-Faltung bekannt. Die Armabschnitte bewirken, dass der Gassack im aktivierten, d.h. im ausgelösten Zustand zunächst in den Armabschnitten aufgeblasen wird. Die Armabschnitte werden demnach schneller aufgeblasen als der ballenartige Abschnitt. Der ballenartige Abschnitt entfaltet sich somit zeitlich nach den Armabschnitten. Dies soll ermöglichen, dass sich der ballenartige Abschnitt stabil nach unten entfaltet. Auch die JP 2008 030 717 A zeigt einen gattungsgemäßen Gassack mit einer Parasol-Faltung bzw. Umbrella-Faltung.

Allerdings besteht im Zusammenhang mit den bekannten Gassack-Konstruktionen ein Nachteil darin, dass die Entfaltung eines derartigen Gassacks von vorstehenden Strukturen der Fahrzeugkarosserie, z.B. Haltegriffen und Gurtumlenkbeschlägen behindert werden kann.

Der Erfindung liegt somit die Aufgabe zugrunde, einen weiterentwickelten Gassack zu schaffen, der sich über seine gesamte Längserstreckung hinweg zuverlässig entfalten kann. Eine weitere Aufgabe der Erfindung besteht darin, ein weiterentwickeltes Verfahren zur Montage eines Gassacks anzugeben.

Erfindungsgemäß wird diese Aufgabe im Hinblick auf die Anordnung eines Gassacks in einem Fahrzeug durch den Gegenstand des Patentanspruches 1 gelöst. Im Hinblick auf das weiterentwickelte Verfahren zur Montage eines Gassacks wird die Aufgabe durch den Gegenstand des Patentanspruchs 8 gelöst.

Zur Lösung der eingangs genannten Aufgabe sieht die Erfindung ein Fahrzeug mit einem Gassack gemäß Anspruch 1 vor.

Ein Gassack mit einem derartigen Aufbau wird auch als Gassack mit einer Parasol-Faltung bzw. Umbrella-Faltung bezeichnet.

Vorzugsweise weisen die Armabschnitte eine derartige Länge auf, dass die Armabschnitte den ballenartigen Abschnitt nicht vollumfänglich umgreifen. Vielmehr wird zwischen den freien Enden der Armabschnitte ein Entfaltungsbereich begrenzt. Mit anderen Worten wird im Entfaltungsbereich der ballenartige Abschnitt nicht von den beiden Armabschnitten umgriffen. Als freies Ende eines Armabschnittes ist das Ende des Armabschnittes zu verstehen, das nicht am Einströmabschnitt des Gassacks ausgebildet ist. Das freie Ende des Armabschnittes ist das Ende des Armabschnitts, das vom Einströmabschnitt des Gassacks maximal beabstandet ist. Der Abstand zwischen dem freien Ende des Armabschnitts und dem Verbindungsabschnitt des Armabschnitts mit dem Einströmabschnitt des Gassacks entspricht der Länge eines Armabschnitts.

Erfindungsgemäß ist der Entfaltungsbereich derart gedreht, dass die Winkelhalbierende des Entfaltungsbereichs im Querschnitt zumindest abschnittsweise eine Befestigungsebene des Gassacks in einem Drehwinkel schneidet.

Die Befestigungsebene des Gassacks, insbesondere die Befestigungsebene eines Vorhanggassacks, wird durch eine Befestigungsplatte und/oder einen Abschnitt des Fahrzeugrahmens gebildet.

Die Befestigungsebene entspricht beispielsweise der Ebene, an der mindestens eine Befestigungsschelle und/oder mindestens ein Befestigungsbügel und/oder mindestens eine Befestigungsklammer befestigt ist/sind. Ein Befestigungsbügel bzw. eine Befestigungsschelle bzw. eine Befestigungsklammer kann beispielsweise mittels Schrauben und/oder Nieten an der Befestigungsebene montiert sein.

Bei der Befestigungsebene kann es sich insbesondere um einen Abschnitt des Dachseitenrahmens, insbesondere um einen Abschnitt des Dachholms, handeln. Vorzugsweise handelt es sich bei der Befestigungsebene um die Ebene in der sich die Innenseite, d.h. die zum Fahrzeuginneren weisende Seite, des Dachholms erstreckt.

Die Montageposition des Gassacks, insbesondere des Vorhanggassacks, innerhalb des Fahrzeugs wird vorzugweise mittels der Befestigungsklammer / des Befestigungsbügels / der Befestigungsschelle gehalten.

Der Entfaltungsbereich weist eine Winkelhalbierende auf. Die Winkelhalbierende halbiert den Abstand zwischen den beiden freien Enden der Armabschnitte. Die Winkelhalbierende verläuft durch den Mittelpunkt des ballenartigen Abschnitts.

Der ballenartige Abschnitt des Gassacks ist vorzugsweise im Querschnitt rund und/oder oval und/oder ellipsenförmig. Es ist auch möglich, dass der ballenartige Abschnitt eine längliche und/oder quadratische und/oder rechteckige Querschnittsform aufweist. Der geometrische Mittelpunkt ist entsprechend der geometrischen Form zu bilden bzw. gebildet. Der zur Winkelhalbierenden zugehörige Winkel, d.h. der Winkel des Entfaltungsbereiches, wird durch zwei gedachte Verbindungslinien gebildet. Die Verbindungslinien werden vom jeweiligen freien Ende eines Armabschnitts zum Mittelpunkt des ballenartigen Abschnittes gezogen. Zwischen den beiden Verbindungslinien ist somit der Winkel des Entfaltungsbereichs gebildet. Die Winkelhalbierende halbiert den Winkel des Entfaltungsbereichs. Der Winkel des Entfaltungsbereichs kann auch als Öffnungswinkel bezeichnet werden.

Als Querschnitt ist ein Schnitt durch den Gassack zu verstehen der quer zur Längsrichtung des Fahrzeugs, bzw. von der Fahrerseite zur Beifahrerseite des Fahrzeugs erfolgt.

Der gesamte Entfaltungsbereich ist erfindungsgemäß derart gedreht, dass die Winkelhalbierende zumindest abschnittsweise nicht parallel zur Befestigungsebene des Gassacks verläuft. Der Entfaltungsbereich ist vorzugsweise derart gedreht, dass der Entfaltungsbereich zur Befestigungsebene hin orientiert ist.

Der erfindungsgemäße Gassack hat des Weiteren den Vorteil, dass nach der Entfaltung der Armabschnitte beispielsweise die Auskleidungen eines Dachhimmels und dergleichen durch die aufgeblasenen Armabschnitte besser verdrängt werden, so dass eine vorspringende Öffnung des Gassacks ausgebildet wird. Dies ermöglicht es anschließend, dass sich der ballenartige Abschnitt über die gesamte Längserstreckung des Gassackes stabil nach unten entfaltet, ohne hierbei an Fahrzeugstrukturen hängenzubleiben.

In einer bevorzugten Ausführungsform der Erfindung ist der Entfaltungsbereich nicht über die vollständige Längserstreckung des Gassacks derart gedreht.

Der Drehwinkel entspricht dem Winkel zwischen der Winkelhalbierenden und der Befestigungsebene bzw. einer Parallelen zur Befestigungsebene.

Der Drehwinkel kann 60° - 10°, insbesondere 50° - 15°, insbesondere 45° - 20°, insbesondere 40° - 22°, betragen.

In einer Ausführungsform der Erfindung weist der Gassack in Längserstreckung mehrere Abschnitte mit unterschiedlichen Drehwinkeln auf. Als Längserstreckung eines Gassacks ist die Erstreckung zu verstehen, die bei einem Vorhanggassack beispielsweise in etwa in Richtung der Fahrzeuglängsachse verläuft. Als Längserstreckung eines Gassacks kann auch die Erstreckung verstanden werden, die in Zusammenhang mit einer Achse steht, um die der Gassack gewickelt und/oder gefaltet ist.

Da der Gassack in Längserstreckung mehrere Abschnitte mit unterschiedlichen Drehwinkeln aufweist, kann das Aufblasverhalten in Längserstreckung des Gassacks an die jeweilige Einbausituation angepasst werden. Demnach ist es möglich, unterschiedliche Entfaltungsverhalten in Abhängigkeit der Fahrzeugeinbauten und/oder Fahrzeugkarosserie auszubilden.

Insbesondere wird eine weiterentwickelte Anordnung eines Gassacks in einem Fahrzeug, angegeben, wobei die Entfaltung eines jeweiligen Längsabschnittes des Gassacks auf die jeweilige Position innerhalb des Fahrzeuges abgestimmt ist.

Erfindingsgemäß muss der Drehwinkel in Längserstreckung des Gassacks ausgehend von der A-Säule des Fahrzeugs in Richtung der B-Säule und/oder der C-Säule des Fahrzeugs abnehmen. Mit anderen Worten wird der Drehwinkel in Längserstreckung des Gassacks immer geringer. Der Entfaltungsbereich des Gassacks kann somit in Längserstreckung des Gassacks ausgehend von der A-Säule des Fahrzeugs in Richtung der B-Säule und/oder der C-Säule des Fahrzeugs immer geringer gedreht sein.

Erfindingsgemäß sind in der vorderen Zone des Gassacks, die zwischen der A-Säule und der B-Säule des Fahrzeugs ausgebildet ist, mehrere Gassackabschnitte mit unterschiedlichen Drehwinkeln ausgebildet. Als vordere Zone des Gassacks wird in Fahrzeuglängsrichtung die erste Zone des Gassacks beschrieben. Die vordere Zone des Gassacks ist mit anderen Worten in etwa zwischen der A-Säule und der B-Säule des Fahrzeugs ausgebildet. Insbesondere im vorderen Bereich bzw. in der vorderen Zone des Gassacks kann der Entfaltungsbereich des Gassackabschnitts in unterschiedlicher Art und Weise gedreht sein.

Vorzugsweise ist im vorderen Drittel der vorderen Zone ein erster Gassackabschnitt ausgebildet, der einen Drehwinkel von 45° - 35° aufweist. Im mittleren Bereich der vorderen Zone kann ein zweiter Gassackabschnitt ausgebildet ist, der einen Drehwinkel von 30° - 20° aufweist. Mit anderen Worten können in der vorderen Zone des Gassacks mindestens zwei Gassackabschnitte ausgebildet sein, die unterschiedliche Drehwinkel aufweisen, wobei der Drehwinkel ausgehend von der A-Säule des Fahrzeugs in Richtung des mittleren Bereichs des Gassacks vorzugsweise abnimmt.

Es ist möglich, dass in der vorderen Zone des Gassacks mehr als zwei Gassackabschnitte mit unterschiedlichen Drehwinkeln ausgebildet sind. Sofern mehrere Gassackabschnitte mit unterschiedlichen Drehwinkeln in der vorderen Zone des Gassacks ausgebildet sind, nimmt der Drehwinkel vorzugsweise von vorne nach hinten, d.h. von der Frontscheibe in Richtung der B-Säule des Gassackabschnitts, ab.

Der Drehwinkel im Bereich der B-Säule des Fahrzeugs kann vorzugsweise 0° betragen. Mit anderen Worten ist der Entfaltungsbereich im Bereich der B-Säule nicht gedreht. Vorzugsweise verläuft die Winkelhalbierende des Entfaltungsbereichs in diesem Bereich der B-Säule des Fahrzeugs parallel zur Befestigungsebene des Gassacks bzw. parallel zu einer Befestigungsplatte und/oder einem Abschnitt des Fahrzeugrahmens.

In einer weiteren Ausführungsform der Erfindung kann der Drehwinkel in der hinteren Zone des Gassacks, die zwischen der B-Säule und der C-Säule des Fahrzeugs ausgebildet ist, 0° betragen. Mit anderen Worten kann der Entfaltungsbereich in der hinteren Zone des Gassacks nicht gedreht ausgebildet sein. Die Winkelhalbierende des Entfaltungsbereichs kann in der hinteren Zone des Gassacks parallel zur Befestigungsebene, d.h. parallel zu einer Befestigungsplatte und/oder einem Abschnitt des Fahrzeugrahmens verlaufen.

Als hintere Zone des Gassacks ist die Zone des Gassacks zu verstehen, die der vorderen Zone in Längsrichtung des Fahrzeugs, d.h. ausgehend von der Frontscheibe in Richtung des Hecks des Fahrzeugs folgt. Bei einer besonders bevorzugten Ausführungsform der Erfindung ist der Entfaltungsbereich des Gassacks lediglich in der vorderen Zone des Gassacks derart gedreht, dass die Winkelhalbierende abschnittsweise die Befestigungsebene in einem Drehwinkel schneidet. Ab der B-Säule des Fahrzeugs ist der Entfaltungsbereich vorzugsweise nicht mehr gedreht, so dass die Winkelhalbierende parallel zur Befestigungsebene verläuft.

Mit anderen Worten kann der Entfaltungsbereich lediglich in der vorderen Hälfte des Gassacks bzw. der vorderen Zone des Gassacks derart gedreht sein, dass die Winkelhalbierende Entfaltungsbereichs zumindest abschnittsweise die Befestigungsebene in einem Drehwinkel schneidet.

Der ballenartige Abschnitt des Gassacks, insbesondere des Vorhanggassacks, ist vorzugsweise aufgerollt und/oder zick-zack-gefaltet.

Im Zusammenhang mit dem in einem Fahrzeug erfindungsgemäß montierten Gassack ist es erstmals möglich, den Entfaltungsbereich des Gassacks derart zu orientieren, dass der Entfaltungsvorgang des Gassacks in Abhängigkeit der jeweiligen Einbausituation bzw. in Abhängigkeit der jeweiligen Einbauten des Fahrzeugs erfolgen kann. In manchen Bereichen des Fahrzeuges ist es notwendig, dass sich der Gassack entlang von Säulen entfaltet. In wiederum anderen Abschnitten ist es notwendig, dass sich der Gassack entlang einer/der Scheibe(n) entfaltet. In wiederum anderen Abschnitten ist es notwendig, dass sich der Gassack in Richtung des Fahrzeuginnenraums, insbesondere in Richtung der Fahrzeuginsassen, entfaltet. Mit Hilfe der vorliegenden Erfindung ist es möglich, verschiedene Entfaltungsorientierungen zu schaffen, ohne dass mehrere Gassackabschnitte unterschiedlich gefaltet und/oder genäht werden müssen. Des Weiteren ist es ebenfalls nicht notwendig, mehrere separate Gassäcke zu montieren.

Mit Hilfe der erfindungsgemäßen Anordnung eines bekannten Gassacks derart, dass der Entfaltungsbereich in unterschiedlichen Abschnitten in Zusammenhang mit der Längserstreckung des Gassacks unterschiedlich orientiert im Fahrzeug montiert ist, ist es möglich, unterschiedliche Einbausituationen des Gassacks zu berücksichtigen, ohne dass große konstruktive Änderungen an dem Gassack und/oder dem Fahrzeug vorzunehmen sind.

Ein weiterer Aspekt der Erfindung betrifft ein Verfahren zur Montage eines Gassacks, insbesondere eines Vorhanggassacks, in einem Fahrzeug, wobei der Gassack im Ruhezustand einen ballenartigen Abschnitt und zwei Armabschnitte umfasst, wobei die Armabschnitte den ballenartigen Abschnitt im Querschnitt abschnittsweise umgreifen und die beiden freien Enden der Armabschnitte einen Entfaltungsbereich begrenzen, wobei die Winkelhalbierende des Entfaltungsbereichs durch den Mittelpunkt des ballenartigen Abschnitts verläuft. Im Zusammenhang mit der Konstruktion des Gassacks bzw. den Merkmalen des Gassacks wird auf die vorangegangenen Erläuterungen verwiesen.

Erfindungsgemäß wird der Entfaltungsbereich des Gassacks bei der Montage zumindest abschnittsweise derart gedreht, dass die Winkelhalbierende zumindest abschnittsweise eine Befestigungsebene des Gassacks, die durch eine Befestigungsplatte und/oder einen Abschnitt des Fahrzeugrahmens gebildet ist, in einem Drehwinkel schneidet.

Vorzugsweise wird der Gassack in einem ersten Montageschritt in dem Fahrzeug vorjustiert. Hierbei ist es möglich, dass der Gassack mit Hilfe mindestens einer Befestigungsklammer und/oder mindestens einer Befestigungsschelle und/oder mindestens eines Befestigungsbügels an einer Befestigungsplatte und/oder einem Abschnitt des Fahrzeugrahmens vorjustiert wird. Die Vor-Justage bzw. Vormontage des Gassacks im Fahrzeug erfolgt derart, dass der Gassack noch gedreht werden kann. Nachdem die grundsätzliche Ausrichtung des Gassacks, nämlich in Längserstreckung des Fahrzeugs erfolgt ist, kann der Gassack anschließend zumindest abschnittsweise derart gedreht werden, dass der Entfaltungsbereich in Richtung der Befestigungsplatte und/oder in Richtung eines Abschnitts des Fahrzeugrahmens gedreht wird.

Vorzugsweise wird der Gassack abschnittsweise derart gedreht, dass die Winkelhalbierende zumindest abschnittsweise die Befestigungsebene, die durch die Befestigungsplatte und/oder den Abschnitt des Fahrzeugrahmens gebildet wird, in einem Drehwinkel schneidet. Bezüglich der Ausrichtung der Gassackabschnitte bzw. der Zonen des Gassacks im Querschnitt wird auf die vorangegangenen Erläuterungen verwiesen. Sofern der Entfaltungsbereich an die jeweilige Einbauposition bzw. Einbausituation entsprechend angepasst wurde, kann die Endmontage des Gassacks im Fahrzeug erfolgen. Das heißt, dass der Gassack derart im Fahrzeug befestigt wird, dass eine Lockerung des Gassacks nicht möglich ist. Beispielsweise wird die mindestens eine Befestigungsschelle und/oder die mindestens eine Befestigungsklammer und/oder der mindestens eine Befestigungsbügel vollständig an der Befestigungsplatte und/oder an einem Abschnitt des Fahrzeugrahmens montiert.

In einer weiteren Ausführungsform des erfindungsgemäß montierten Gassacks im Fahrzeug ist es möglich, dass der Entfaltungsbereich in der vorderen Zone des Gassacks, insbesondere im vorderen Drittel der vorderen Zone des Gassacks, kleiner ist bzw. kleiner ausgebildet ist als in der hinteren Zone des Gassacks, insbesondere im restlichen Bereich des Gassacks. Mit anderen Worten ist der Öffnungswinkel des Gassacks im Bereich des vorderen Drittels der vorderen Zone des Gassacks geringer als im restlichen Bereich des Gassacks. Beispielsweise kann der Öffnungswinkel des Entfaltungsbereichs im vorderen Drittel der vorderen Zone 30° betragen, wohingegen im restlichen Bereich des Gassacks der Öffnungswinkel des Entfaltungsbereichs 60° betragen kann.

Die Erfindung wird im Folgenden anhand von Ausführungsbeispielen unter Bezugnahme auf die beigefügten, schematischen Zeichnungen näher erläutert.

Darin zeigen:
Fig. 1 den Aufbau eines beispielhaft montierten Gassacks im Querschnitt;
Fig. 2 einen erfindungsgemäß montierten Gassack im Fahrzeug in einer Querschnittsansicht;
Fig. 3 eine Darstellung eines erfindungsgemäß montierten Gassacks in seiner gesamten Längserstreckung; und
Fig. 4a bis 4e verschiedene Querschnitte durch den Gassack gemäß der in Fig. 3 dargestellten Schnittebenen.

Im Folgenden werden für gleiche und gleichwirkende Teile dieselben Bezugsziffern verwendet.

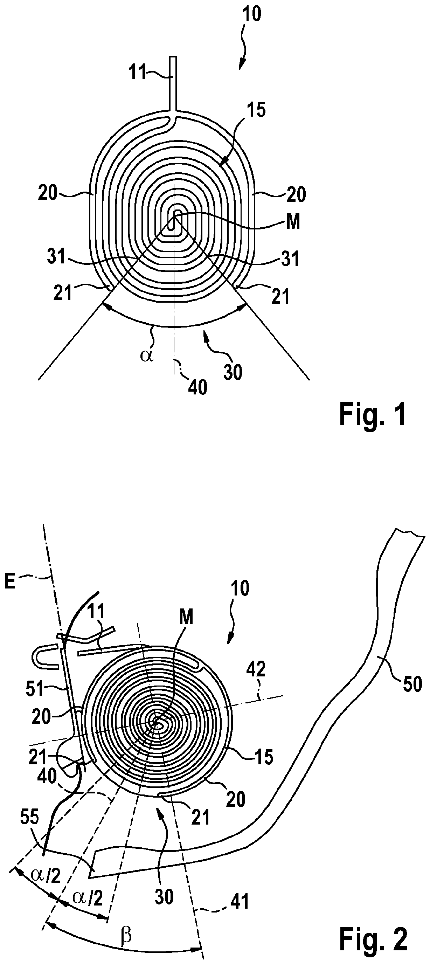

Der in Fig. 1 dargestellte Gassack 10 weist eine sogenannte Parasol-Faltung bzw. Umbrella-Faltung auf. Ein derartiger Gassack 10 besteht aus einem ballenartigen Abschnitt 15 und zwei Armabschnitten 20. Die Armabschnitte 20 umgreifen den ballenartigen Abschnitt 15 im dargestellten Querschnitt. Die Armabschnitte 20 schließen sich an den Einströmabschnitt 11 des Gassacks 10 an. Der Einströmabschnitt 11 steht somit in Verbindung mit einem Gasgenerator. Bei einem aktivierten Zustand werden zunächst die Armabschnitte 20 aufgeblasen, da diese dem Einströmabschnitt 11 am nächsten liegen. Zwischen den freien Enden 21 der Armabschnitte 20 wird ein Entfaltungsbereich 30 begrenzt. Im Entfaltungsbereich 30 ist der ballenartige Abschnitt 15 somit nicht von den Armabschnitten 20 abgedeckt. Als freie Enden 21 der Armabschnitte 20 sind die Enden der Armabschnitte 20 zu verstehen, die vom Einströmabschnitt 11 am entferntesten angeordnet sind.

Im dargestellten Beispiel ist der ballenartige Abschnitt 15 ein aufgerollter Abschnitt des Gassacks 10. Es ist auch möglich, dass der ballenartige Abschnitt 15 zumindest abschnittsweise zick-zack-gefaltet ist.

Der Entfaltungsbereich 30 steht im Zusammenhang mit einem Öffnungswinkel α. Der Öffnungswinkel α wird durch die Verbindungslinien 31 der freien Enden 21 der Armabschnitte 20 mit dem Mittelpunkt M des ballenartigen Abschnitts 15 gebildet. Die (gedachten) Verbindungslinien 31 begrenzen somit den Öffnungswinkel α des Entfaltungsbereichs 30. Der Öffnungswinkel α wird von der Winkelhalbierenden 40 halbiert. Die Winkelhalbierende 40 verläuft durch den Mittelpunkt M bzw. liegt auf der Mittellinie des ballenartigen Abschnitts 15.

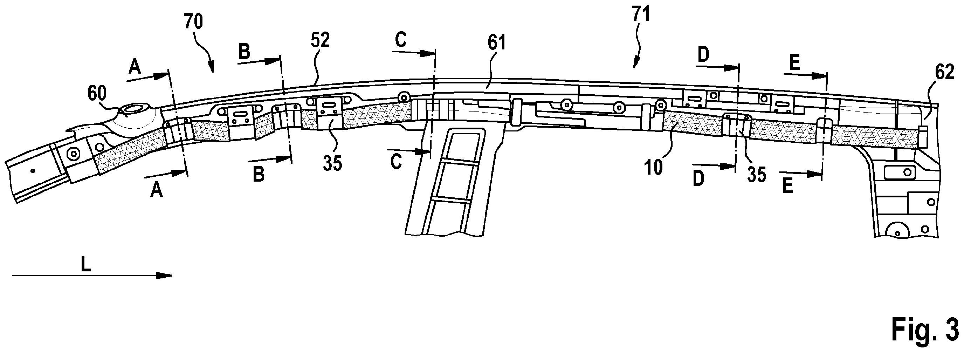

In Fig. 2 wird die erfindungsgemäße Montage des Gassacks 10 im Fahrzeug dargestellt. Der Gassack 10 ist im Querschnitt dargestellt. Der Gassack 10 befindet sich zwischen einer Abdeckung 50 des Fahrzeugs und einem Fahrzeugrahmen 51. Bei der Abdeckung 50 kann es sich beispielsweise um Abschnitte des Fahrzeughimmels handeln. Beim Fahrzeugrahmen 51 handelt es sich vorzugsweise um einen Dachseitenrahmen. Der Abschnitt des Fahrzeugrahmens 51 bildet die Befestigungsebene E. Der Gassack 10 kann beispielsweise mittels Befestigungsklammern (siehe Fig. 3) an einem Abschnitt des Fahrzeugrahmens 51 befestigt werden.

Der Gassack 10 ist erfindungsgemäß derart montiert, dass der Entfaltungsbereich 30 derart gedreht ist, dass die Winkelhalbierende 40 zumindest abschnittsweise die Befestigungsebene E in einem Drehwinkel β schneidet. Die Winkelhalbierende 40 ist somit nicht parallel zur Befestigungsebene E ausgebildet. Der Entfaltungsbereich 30 weist vielmehr zur Befestigungsebene E.

Der Drehwinkel β wird zwischen der Winkelhalbierenden 40 und der Befestigungsebene E bzw. einer Parallelen 41 zur Befestigungsebene E gebildet. Bei der Parallele 41 handelt es sich um die durch den Mittelpunkt M des ballenartigen Abschnitts 15 verlaufenden Parallele zur Befestigungsebene E. Die Winkelhalbierende 40 verläuft in Richtung des Abdeckungsendes 55. Im Aktivierungsfall des Gassacks 10 kann somit eine gerichtete Entfaltung in den Bereich des Abdeckungsendes 55 erfolgen, so dass ein schnelleres und leichteres Öffnen der Abdeckung 50 erfolgen kann.

Der Drehwinkel β kann 60° - 10°, insbesondere 50° - 15°, insbesondere 45° - 20°, insbesondere 40° - 22°, betragen. Im dargestellten Beispiel verläuft der Einströmabschnitt 11 zumindest abschnittsweise senkrecht zur Befestigungsebene E. An den Einströmabschnitt 11 schließen sich, wie dies in Fig. 1 dargestellt wird, die Armabschnitte 20 an. Als Mittelpunkt M des ballenartigen Abschnitts 15 ist der Kreuzungspunkt der Parallelen 41 mit der Senkrechten 42 ausgebildet. Die Senkrechte 42 verläuft senkrecht zur Befestigungsebene E.

In Fig. 3 wird die Einbausituation in Längserstreckung L des Gassacks 10 dargestellt. Die Längserstreckung L entspricht der Längserstreckung des Fahrzeugs von der vorderen Stoßstange bis zum Fahrzeugheck. Der Gassack 10 ist als Vorhanggassack ausgebildet und verläuft somit an der Innenseite des Dachseitenrahmens 52. Als Innenseite ist die Seite zu verstehen, die zum Fahrzeuginneren weist. Ebenfalls dargestellt ist die A-Säule 60, die B-Säule 61, sowie die C-Säule 62 des Fahrzeugs. In Längserstreckung L verläuft der Gassack 10 somit von der A-Säule bis zur C-Säule. Der erste Abschnitt des Gassacks 10 befindet sich somit auf einem Teilbereich der A-Säule 60. In Längserstreckung L des Gassacks 10 sind mehrere Abschnitte mit unterschiedlichen Drehwinkeln ausgebildet. Der Drehwinkel β nimmt in Längserstreckung L des Gassacks 10 ausgehend von der A-Säule 60 des Fahrzeugs in Richtung der B-Säule 61 und/oder der C-Säule 62 des Fahrzeugs ab. Der Gassack 10 ist mit Hilfe von Befestigungsklammern 35 an dem Dachseitenrahmen 52 befestigt.

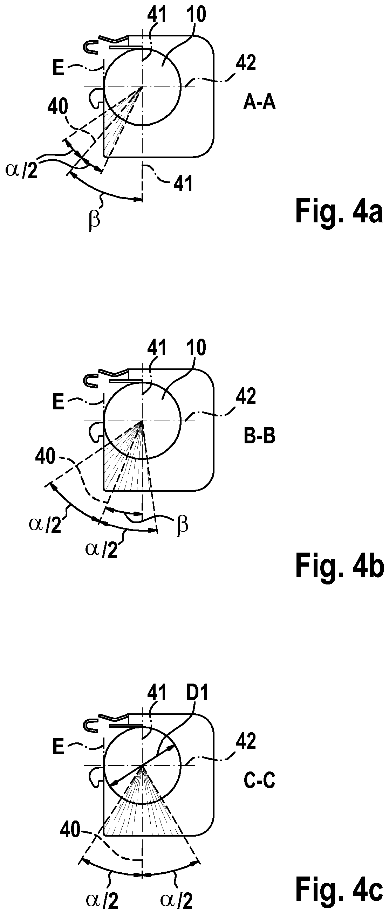

In den Fig. 4a bis 4e werden die Querschnitte entsprechend der eingezeichneten Schnittlinien A-A, B-B, C-C, D-D und E-E dargestellt. In der vorderen Zone 70 des Gassacks 10, die in etwa zwischen der A-Säule 60 und der B-Säule 61 ausgebildet ist, sind mehrere Gassackabschnitte mit unterschiedlichen Drehwinkeln ausgebildet. Der Gassack 10 ist auch in einem kurzen Abschnitt der A-Säule 60 befestigt. Im vorderen Drittel der vorderen Zone 70 ist ein erster Gassackabschnitt ausgebildet, der einen Querschnitt A-A gemäß Fig. 4a aufweist. Der Drehwinkel β im vorderen Drittel der vorderen Zone 70 beträgt 45° - 35°. Der Öffnungswinkel α beträgt in diesem Abschnitt den geringsten Wert des Gassacks über die gesamte Längserstreckung L hinweg. Der Öffnungswinkel α beträgt in diesem Zusammenhang beispielsweise 30°.

In einem mittleren Bereich der vorderen Zone 70 ist ein zweiter Gassackabschnitt ausgebildet, dessen Querschnitt B-B in Fig. 4b dargestellt ist. Der zweite Gassackabschnitt weist einen in Vergleich zum Gassackabschnitt der Fig. 4a größeren Öffnungswinkel α auf. Der Öffnungswinkel α beträgt gemäß Fig. 4b beispielsweise 60°. Der Drehwinkel β ist im dargestellten Beispiel geringer als der Drehwinkel β in Fig. 4a. Der Drehwinkel β kann einen Wert von 30° bis 20°, insbesondere einen Wert von 23°, aufweisen.

In Fig. 4c ist der Schnitt C-C dargestellt. Der Drehwinkel β im Bereich der B-Säule 61 des Fahrzeugs beträgt, wie dies in Fig. 4c dargestellt ist, 0°. Der Öffnungswinkel α ist im Vergleich zur Fig. 4b gleichbleibend ausgebildet und beträgt somit beispielsweise 60°.

Wie in den Fig. 4a bis 4c dargestellt ist, sind lediglich die Bereiche rund um die dargestellten Gassackquerschnitte A-A bzw. B-B derart im Fahrzeug montiert, dass die Entfaltungsbereiche 30 zur Befestigungsebene E weisen. Ab der B-Säule 61 bzw. dem Querschnitt C-C ist der Entfaltungsbereich 30 nach unten gerichtet ausgerichtet. Der Gassack 10 kann somit entlang der B-Säule 61 entfaltet werden.

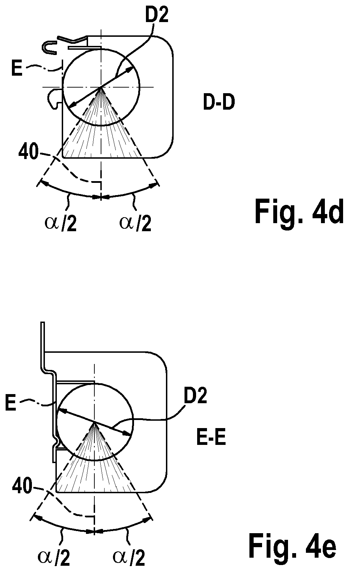

Wie den Fig. 4d und 4e entnommen werden kann, ist der Gassack 10 bzw. der Entfaltungsbereich 30 in den Bereichen D-D bzw. E-E nicht gedreht. Die Winkelhalbierende 40 weist jeweils nach unten bzw. ist jeweils parallel zur Befestigungsebene E ausgebildet. In diesen Bereichen entfaltet sich der Gassack im aktivierten Zustand parallel zur Befestigungsebene E und nicht etwa in Richtung der Fenster, wie dies in den Abschnitten der Fig. 4a und 4b initiiert ist.

Der Öffnungswinkel α entspricht dem Öffnungswinkel gemäß Position B-B. Mit anderen Worten ist der Öffnungswinkel α ab der Position B-B bzw. ab dem mittleren Bereich der vorderen Zone 70 gleichbleibend. In der hinteren Zone 71, die sich ab der B-Säule 61 bis zur C-Säule 62 erstreckt, ist der Drehwinkel β gleich groß, nämlich 0°.

Im Abschnitt C-C ist der Durchmesser D1 des ballenartigen Abschnittes 15 (siehe Fig. 4c) größer als der Durchmesser D2 des ballenartigen Abschnitts 15 in der hinteren Zone 71 (siehe Fig. 4d und 4e). Mit anderen Worten weist der Gassack 10, insbesondere der ballenartige Abschnitt 15 im Bereich der B-Säule 61 bzw. im Abschnitt C-C den größten Durchmesser auf.

Insgesamt ergibt sich das Bild, dass der Drehwinkel β in Längserstreckung L des Gassacks 10 unterschiedliche Werte aufweist. Insbesondere in der vorderen Zone 70 des Gassacks 10 sind die Drehwinkel β unterschiedlich ausgebildet, wobei der Drehwinkel β in Richtung der B-Säule 61 abnimmt.

Mit Hilfe der erfindungsgemäßen Anordnung des Gassacks 8 m Fahrzeug können somit unterschiedliche Entfaltungsrichtungen initiiert werden.

### Bezugszeichenliste

- 10: Gassack
- 11: Einströmabschnitt
- 15: Ballenartiger Abschnitt
- 20: Armabschnitt
- 21: freies Ende
- 30: Entfaltungsbereich
- 31: Verbindungslinie
- 35: Befestigungsklammer
- 40: Winkelhalbierende
- 41: Parallele
- 42: Senkrechte
- 50: Abdeckung
- 51: Fahrzeugsrahmen
- 55: Abdeckungsende
- 60: A-Säule
- 61: B-Säule
- 62: C-Säule
- 70: vordere Zone
- 71: hintere Zone

- D1: Durchmesser ballenartiger Abschnitt
- D2: Durchmesser ballenartiger Abschnitt
- E: Befestigungsebene
- L: Längserstreckung
- M: Mittelpunkt
- α: Öffnungswinkel
- β: Drehwinkel

## Patentansprüche

1. Fahrzeug mit einem Gassack (10), insbesondere mit einem Vorhanggassack, der im Ruhezustand einen ballenartigen Abschnitt (15) und zwei Armabschnitte (20) umfasst, wobei die Armabschnitte (20) den ballenartigen Abschnitt (15) im Querschnitt abschnittsweise umgreifen und die beiden freien Enden (21) der Armabschnitte (20) einen Entfaltungsbereich (30) begrenzen, wobei die Winkelhalbierende (40) des Entfaltungsbereichs (30) durch den Mittelpunkt (M) des ballenartigen Abschnitts (15) verläuft, wobei der Entfaltungsbereich (30) derart gedreht ist, dass die Winkelhalbierende (40) zumindest abschnittsweise eine Befestigungsebene (E) des Gassacks (10), die durch eine Befestigungsplatte und/oder einen Abschnitt des Fahrzeugrahmens (51) gebildet ist, in einem Drehwinkel (β) schneidet
**dadurch gekennzeichnet, dass**
der Drehwinkel (β) in Längserstreckung (L) des Gassacks (10) ausgehend von der A-Säule (60) des Fahrzeugs in Richtung der B-Säule (61) und/oder der C-Säule (62) des Fahrzeugs abnimmt, wobei in der vorderen Zone (70) des Gassacks (10), die zwischen der A-Säule (60) und der B-Säule (61) des Fahrzeugs ausgebildet ist, mehrere Gassackabschnitte mit unterschiedlichen Drehwinkeln (β) ausgebildet sind.

2. Fahrzeug nach Anspruch 1,
**dadurch gekennzeichnet, dass**
der Drehwinkel (β) 60° - 10°, insbesondere von 50° - 15°, insbesondere von 45° - 20°, insbesondere von 40° - 22°, beträgt.

3. Fahrzeug nach Anspruch 1 oder 2,
**dadurch gekennzeichnet, dass**
die Befestigungsebene (E) des Gassacks (10) durch einen Abschnitt des Dachseitenrahmens (52) gebildet ist.

4. Fahrzeug nach einem der Ansprüche 1 bis 3,
**dadurch gekennzeichnet, dass**
der Gassack (10) in Längserstreckung (L) mehrere Abschnitte mit unterschiedlichen Drehwinkeln (β) aufweist.

5. Fahrzeug nach einem der vorhergehenden Ansprüche,
**dadurch gekennzeichnet, dass**
im vorderen Drittel der vorderen Zone (70) ein erster Gassackabschnitt (A-A) ausgebildet ist, der einen Drehwinkel (β) von 45° - 35° aufweist, wobei im mittleren Bereich der vorderen Zone (70) ein zweiter Gassackabschnitt (B-B) ausgebildet ist, der einen Drehwinkel (β) von 30° - 20° aufweist.

6. Fahrzeug nach einem der einem der vorhergehenden Ansprüche,
**dadurch gekennzeichnet, dass**
der Drehwinkel (β) im Bereich der B-Säule (61) des Fahrzeugs 0° beträgt.

7. Fahrzeug nach einem der einem der vorhergehenden Ansprüche,
**dadurch gekennzeichnet, dass**
der Drehwinkel (β) in der hinteren Zone (71) des Gassacks (10), die zwischen der B-Säule (61) und der C-Säule (62) des Fahrzeugs ausgebildet ist, 0° beträgt.

8. Verfahren zur Montage eines Gassacks (10), insbesondere eines Vorhanggassacks, in einem Fahrzeug, wobei der Gassack (10) im Ruhezustand einen ballenartigen Abschnitt (15) und zwei Armabschnitte (20) umfasst, wobei die Armabschnitte (20) den ballenartigen Abschnitt (15) im Querschnitt abschnittsweise umgreifen und die beiden freien Enden (21) der Armabschnitte (20) einen Entfaltungsbereich (30) begrenzen, wobei die Winkelhalbierende (40) des Entfaltungsbereichs (30) durch den Mittelpunkt (M) des ballenartigen Abschnitts (15) verläuft,
wobei der Entfaltungsbereich (30) des Gassacks (10) bei der Montage zumindest abschnittsweise derart gedreht wird, dass die Winkelhalbierende (40) zumindest abschnittsweise eine Befestigungsebene (E) des Gassacks (10), die durch eine Befestigungsplatte und/oder einen Abschnitt des Fahrzeugrahmens (51) gebildet ist, in einem Drehwinkel (β) schneidet
**dadurch gekennzeichnet, dass**
der Drehwinkel (β) in Längserstreckung (L) des Gassacks (10) ausgehend von der A-Säule (60) des Fahrzeugs in Richtung der B-Säule (61) und/oder der C-Säule (62) des Fahrzeugs abnimmt, wobei in der vorderen Zone (70) des Gassacks (10), die zwischen der A-Säule (60) und der B-Säule (61) des Fahrzeugs ausgebildet ist, mehrere Gassackabschnitte mit unterschiedlichen Drehwinkeln (β) ausgebildet sind.

## Claims

1. A vehicle comprising an airbag (10), especially comprising a curtain airbag, comprising in the non-operating state a bale-type section (15) and two arm sections (20), wherein the arm sections (20) in cross-section encompass the bale-type section (15) in portions and the two free ends (21) of the arm sections (20) delimit a deployment area (30), the bisecting line (40) of the deployment area (30) extending across the center (M) of the bale-type section (15),
wherein the deployment area (30) is rotated so that the bisecting line (40) at least in portions intersects a securing plane (E) of the airbag (10) formed by a securing plate and/or a section of the vehicle frame (51) at an angle of rotation (β),
**characterized in that**
the angle of rotation (β) in longitudinal extension (L) of the airbag (10) decreases starting from the A-pillar (60) of the vehicle in the direction of the β-pillar (61) and/or C-pillar (62) of the vehicle,
wherein in the front zone (70) of the airbag (10) formed between the A-pillar (60) and the B-pillar (61) of the vehicle plural airbag sections including different angles of rotation (β) are configured.

2. The vehicle according to claim 1,
**characterized in that**
the angle of rotation (β) is 60° - 10°, especially 50° - 15°, especially 45° - 20°, in particular 40° - 22°.

3. The vehicle according to claim 1 or 2,
**characterized in that**
the securing plane (E) of the airbag (10) is formed by a section of the roof side frame (52).

4. The vehicle according to any one of the claims 1 to 3,
**characterized in that**
in the longitudinal extension (L) the airbag (10) has plural sections including different angles of rotation (β).

5. The vehicle according to any one of the preceding claims,
**characterized in that**
in the front third of the front zone (70) a first airbag section (A-A) is formed including an angle of rotation (β) of 45° - 35°, wherein in the central area of the front zone (70) a second airbag section (B-B) is formed including an angle of rotation (β) of 30° - 20°.

6. The vehicle according to any one of the preceding claims,
**characterized in that**
the angle of rotation (β) in the area of the B-pillar (61) of the vehicle is 0°.

7. The vehicle according to any one of the preceding claims,
**characterized in that**
the angle of rotation (β) in the rear zone (71) of the airbag (10) formed between the B-pillar (61) and the C-pillar (62) of the vehicle is 0°.

8. A method of mounting an airbag (10), especially a curtain airbag, in a vehicle, wherein the airbag (10) in the non-operating state comprises a bale-type section (15) and two arm sections (20), wherein the arm sections (20) in cross-section encompass the bale-type section (15) in portions and the two free ends (21) of the arm sections (20) delimit a deployment area (30), the bisecting line (40) of the deployment area (30) extending across the center (M) of the bale-type section (15),
wherein the deployment area (30) of the airbag (10) during assembly is rotated at least in portions such that the bisecting line (40) at least in portions intersects a securing plane (E) of the airbag (10) formed by a securing plate and/or a section of the vehicle frame (51) at an angle of rotation (β),
**characterized in that**
the angle of rotation (β) in the longitudinal extension (L) of the airbag (10) decreases starting from the A-pillar (60) of the vehicle in direction of the B-pillar (61) and/or C-pillar (62) of the vehicle,
wherein in the front zone (70) of the airbag (10) formed between the A-pillar (60) and B-pillar (61) of the vehicle plural airbag sections including different angles of rotation (β) are configured.

## Revendications

1. Véhicule avec airbag (10), en particulier avec airbag rideau, qui à l'état de repos comprend une section en forme de boule (15) et deux sections en forme de bras (20), pour lequel les sections en forme de bras (20) englobent partiellement la section en forme de boule (15) en coupe transversale et les deux extrémités libres (21) des sections en forme de bras (20) délimitent une zone de déploiement (30), pour lequel la bissectrice (40) de la zone de dépliage (30) passe par le point central (M) de la section en forme de boule (15),
pour lequel la zone de déploiement (30) est tournée de telle sorte que la bissectrice (40) coupe selon un angle de rotation (β) au moins partiellement un plan de fixation (E) du coussin gonflable (10), qui est formé par une plaque de fixation et / ou une section du châssis du véhicule (51),
**caractérisé en ce que**
l'angle de rotation (β) diminue dans l'extension longitudinale (L) du coussin gonflable (10) à partir du montant avant A (60) du véhicule en direction du montant central B (61) et / ou du montant arrière C (62) du véhicule,
pour lequel dans la zone avant (70) du coussin gonflable (10), qui est formée entre le montant avant A (60) et le montant central B (61) du véhicule, sont formés une pluralité de sections de coussin gonflable avec différents angles de rotation (β).

2. Véhicule selon la revendication 1,
**caractérisé en ce que**
l'angle de rotation (β) est de 60° à 10°, en particulier de 50° à 15°, en particulier de 45° à 20°, en particulier de 40° à 22°.

3. Véhicule selon la revendication 1 ou 2,
**caractérisé en ce que**
le plan de fixation (E) du coussin gonflable (10) est formé par une section de la structure latéral du toit (52).

4. Véhicule selon l'une des revendications 1 à 3,
**caractérisé en ce que**
le coussin gonflable (10) a une pluralité de sections avec différents angles de rotation (β) dans l'extension longitudinale (L).

5. Véhicule selon l'une des revendications précédentes,
**caractérisé en ce que**
une première section d'airbag (AA) est formée dans le tiers avant de la zone avant (70), laquelle présente un angle de rotation (β) de 45° à 35°, pour lequel une deuxième section d'airbag (BB) est formée dans la zone médiane de la zone avant (70), laquelle présente un angle de rotation (β) de 30° à 20°.

6. Véhicule selon l'une des revendications précédentes,
**caractérisé en ce que**
l'angle de rotation (β) dans la zone du montant central B (61) du véhicule est de 0°.

7. Véhicule selon l'une des revendications précédentes,
**caractérisé en ce que**
l'angle de rotation (β) dans la zone arrière (71) du coussin gonflable (10), qui est formé entre le montant central B (61) et le montant arrière C (62) du véhicule, est de 0°.

8. Procédé pour assembler un airbag (10), en particulier un airbag rideau, dans un véhicule, pour lequel l'airbag (10) comprend une section en forme de boule (15) et deux sections en formede bras (20) à l'état de repos, pour lequel les sections en forme de bras (20) englobent partiellement la section en forme de boule (15) en coupe transversale et les deux extrémités libres (21) des sections en forme de bras (20) délimitent une zone de déploiement (30),pour lequel la bissectrice (40) de la zone de déploiement (30) passe par le point central (M) de la section en forme de boule (15),
pour lequel la zone de déploiement (30) du coussin gonflable (10) est tournée par l'assemblage au moins partiellement, de telle sorte que la bissectrice (40) coupe avec un angle de rotation (β) au moins partiellement un plan de fixation (E) du coussin gonflable (10), lequel est formé par une plaque de fixation et / ou une section du châssis du véhicule (51),
**caractérisé en ce que**
l'angle de rotation (β) se réduit dans l'extension longitudinale (L) du coussin gonflable (10) à partir du montant avant A (60) du véhicule en direction du montant central B (61) et / ou du montant arrière C (62) du véhicule,
pour lequel dans la zone avant (70) du coussin gonflable (10), qui est formée entre le montant avant A (60) et le montant central B (61) du véhicule, sont formés une pluralité de sections de coussin gonflable avec différents angles de rotation (β).
